(19) **Europäisches Patentamt**

**European Patent Office**

**Office européen des brevets**

(11) **EP 1 507 141 A1**

(12) **EUROPEAN PATENT APPLICATION**
published in accordance with Art. 158(3) EPC

(43) Date of publication:
**16.02.2005 Bulletin 2005/07**

(51) Int Cl.⁷: **G01N 21/892**, G06T 1/00,
G06T 7/00

(21) Application number: **03752907.0**

(22) Date of filing: **16.05.2003**

(86) International application number:
**PCT/JP2003/006102**

(87) International publication number:
**WO 2003/098201 (27.11.2003 Gazette 2003/48)**

(84) Designated Contracting States:
**AT BE BG CH CY CZ DE DK EE ES FI FR GB GR
HU IE IT LI LU MC NL PT RO SE SI SK TR**

(30) Priority: **21.05.2002 JP 2002146787**

(71) Applicant: **JFE Steel Corporation
Tokyo, 100-0011 (JP)**

(72) Inventors:
• **HIRATA, Takehide, JFE R & D Corporation
Kawasaki-shi, Kanagawa 210-0855 (JP)**
• **ASANO, Kazuya, JFE R & D Corporation
Kawasaki-shi, Kanagawa 210-0855 (JP)**
• **TOMURA, Yasuo, Intellectual Prop. Dept,
JFE S. C.
Chiyoda-ku, Tokyo 100-0011 (JP)**

(74) Representative: **Grünecker, Kinkeldey,
Stockmair & Schwanhäusser Anwaltssozietät
Maximilianstrasse 58
80538 München (DE)**

(54) **SURFACE DEFECT JUDGING METHOD**

(57)   A decision algorithm of discriminating a defect type and/or a defect level is automatically produced in a short time. The accuracy of defect classification in terms of a defect type or a defect level is improved. More specifically, feature values of surface defects acquired in the past are represented as points in a feature space, constraint is set that when the feature space is mapped into a space by an assumed mapping function, a discriminant plane can be defined in the mapped space such that mapped feature values are linearly separable perfectly with respect to the discriminant plane, an objective function is defined as the distance between the discriminant plane and a point located closest to the discriminant plane, an optimal discriminant plane is determined by solving a quadratic programming problem such that the objective function is maximized under the constraint, the determined discriminant plane is employed as a discriminant function, a feature value of a surface defect whose type is unknown is substituted into the discriminant function, and it is determined, from the resultant value of the discriminant function, whether the surface defect whose type is unknown is of the particular surface type.

FIG. 1

**Description**

Technical Field

The present invention relates to a method of discriminating the type or the level of a surface defect in a surface defect test.

Background Art

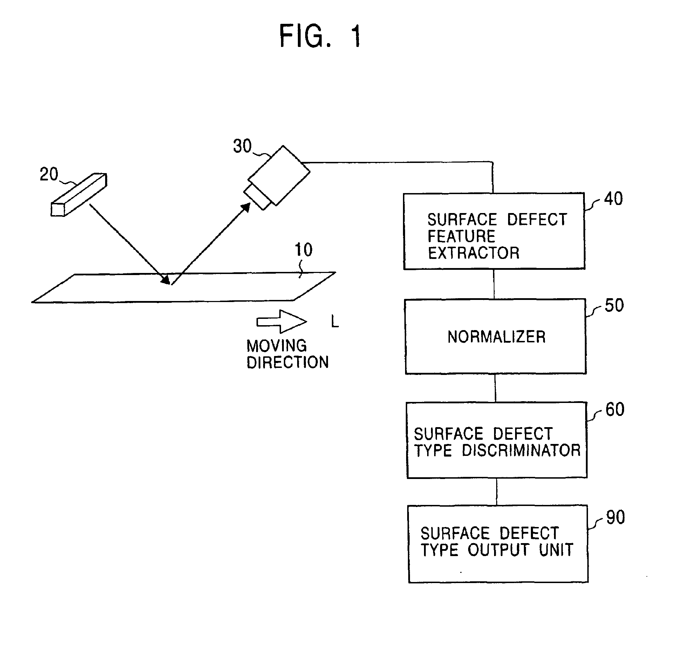

In a typical known apparatus for detecting a surface defect of a product (hereinafter, referred to as a "material under test" (MUT)), as shown in Fig. 1, the surface of a moving MUT 10 is illuminated with light emitted by an external light source 20, light reflected from the surface of the MUT 10 is captured by a camera 30 and an image of the surface of the MUT 10 is taken, a feature value of a defect is extracted from the image, and the defect type or the defect level is determined from the extracted feature value.

In such a surface defect detector, feature values associated with sizes such as a length, a width, and/or an area of a surface defect, feature values associated with shapes such as similarity to circle and/or aspect ratio, and feature values associated with image density such as an average image density, a minimum image density, and/or a maximum image density of a surface defect are extracted from the defect image, and the defect type and/or defect level are determined from the extracted feature values using a tree decision method. In the tree decision method, a combination of decision conditions is expressed in the form of a tree, and decision conditions expressed in the decision tree are examined branch by branch as follows. First, a first decision condition is examined. If the first decision condition is satisfied, the defect is determined to be of a first defect type. If the first decision condition is not satisfied, a second decision condition is examined. If the second condition is satisfied, the defect is determined to be of a second defect type. The above process is performed repeatedly until the defect type or the defect level is determined. In decision according to each decision condition, values of one or more preselected features characterizing a particular defect type or defect level are compared with threshold values predetermined for the respective features.

Disclosure of Invention

In the conventional technique described above, features characterizing respective defect types are analyzed by a skilled person on the basis of a large amount of data, and features and threshold values for respective decision conditions are determined by trial and error. Thus, a troublesome and complicated task is needed to finally establish a decision algorithm, and it takes a long time to start up a surface defect detection apparatus.

If the material or the production method of the product to be tested is changed, the troublesome and long task described above must be performed again from the beginning to establish the decision algorithm, and thus it is difficult to quickly adapt to such a change.

Theoretically, if a large number of features and a large number of associated threshold values are defined in the decision algorithm, the accuracy of defect classification for a defect type or a defect level is improved. However, in practice, use of a large number of features makes it difficult to perform analysis, and thus there is a limit on improvement in accuracy of defect classification for the defect type or the defect level. Herein, the accuracy of defect classification is defined as the coincidence ratio between the numbers of samples that are equally determined by both the defect detection apparatus and a human inspector. More specifically, when the same samples are tested in terms of, for example, the defect type A by both the defect detection apparatus and a human inspector, the accuracy of defect classification is given by the ratio of the number of samples that are correctly determined to be of the defect type A by the defect detection apparatus to the number of samples that are determined to be of the defect type A by the human inspector. The accuracy of defect classification may also be defined by the ratio of the number of samples that are judged, by a human inspector, as being correctly determined by the surface defect detector to the number of samples that are determined to be of the type A by the surface defect detector. The accuracy of defect classification can also be defined in a similar manner for defect levels.

Japanese Unexamined Patent Application Publication No. 4-142412 discloses a technique to easily establish a decision algorithm. In this technique, a decision algorithm is automatically established using a neural network. However, the technique using the neural network needs to learn a huge number of data in an inefficient manner and thus the learning needs a long time. Besides, because the decision algorithm is produced in a black box, it is impossible to modify the decision algorithm hidden in the black box even if decision is not correct for a particular surface defect.

In view of the above, an object of the present invention is to provide a technique to automatically establish a decision algorithm of determining a defect type and/or a defect level with an improved accuracy of defect classification.

In a first aspect, the present invention provides a surface defect classification method for acquiring information associated with a surface state of a material under test, extracting a feature value of a surface defect from the acquired information, determining whether the surface defect is of a particular defect type, on the basis of the extracted feature value, the method comprising the steps of preparing, as learning data, feature values of surface defects acquired in the past and data indicating the particular surface defect type related to feature values, representing the learning data as points in a feature space, under constraint that a discriminant plane can be defined in a space to which the feature space is mapped by an assumed mapping function such that mapped feature values are perfectly linearly separable with respect to the discriminant plane, solving a quadratic programming problem such that an objective function defined as the distance between the discriminant plane and a point located closest to the discriminant plane is maximized, employing, as a discriminant function, an optimal discriminant plane obtained by solving the above quadratic programming problem, substituting a feature value of a surface defect whose type is unknown into the discriminant function, and determining, from the resultant value of the discriminant function, whether the surface defect whose type is unknown is of the particular surface type.

In a second aspect, the present invention provides a surface defect classification method for acquiring information associated with a surface state of a material under test, extracting a feature value of a surface defect from the acquired information, determining whether the surface defect is of a particular defect type, on the basis of the extracted feature value, the method comprising the steps of preparing, as learning data, feature values of surface defects acquired in the past and data indicating the particular surface defect type related to feature values, representing the learning data as points in a feature space, setting constraint that when the feature space is mapped into a space by an assumed mapping function, a discriminant plane can be defined in the mapped space such that mapped feature values are perfectly linearly separable with respect to the discriminant plane, defining an objective function as the distance between the discriminant plane and a point located closest to the discriminant plane, relaxing the constraint in terms of the perfect linear separability such that there can exist a point that results in incorrect classification, and modifying the objective function by adding a penalty term to the objective function, determining a discriminant plane by solving a quadratic programming problem such that the modified objective function is maximized under the relaxed constraint, and employing the determined discriminant plane as a discriminant function, and substituting a feature value of a surface defect whose type is unknown into the discriminant function, and determining, from the resultant value of the discriminant function, whether the surface defect whose type is unknown is of said particular surface type.

In a third aspect, the present invention provides a surface defect classification method based in the first or second aspect, wherein the bias term in the discriminant function is adjusted such that a desired accuracy of defect classification is obtained for a particular important surface defect type that is not allowed to be missed.

In a fourth aspect, the present invention provides a surface defect classification method for discriminating a defect level using a surface defect classification method according to one of first to third aspects described above.

In a fifth aspect, the present invention provides a surface defect classification method for discriminating a plurality of defect types and/or a plurality of defect levels in accordance with a decision tree in which a surface defect classification method according to one of the first to fourth aspects is implemented.

In the first aspect of the present invention, it becomes possible to perfectly discriminate data that are linearly inseparable in the feature space, and thus an improvement in accuracy of defect classification is achieved. The decision algorithm is automatically produced in a short time, and thus a troublesome task to establish the decision algorithm is minimized. Furthermore, it becomes possible to start up the surface defect detector in a short time.

In the second aspect of the present invention, it is possible to correctly discriminate a defect type without overfitting, even when there are both data associated with the defect type and other data close to the discriminant plane.

In the third aspect of the present invention, the discriminant plane can be intentionally displaced by a skilled person or the like to expand a feature space region of an important surface defect that is not allowed to be missed so that the accuracy of defect classification for defect types of that defect type is increased to a desired level.

In the fourth aspect of the present invention, the defect level can be discriminated using the method based on the defect type classification method according to one of the first to third aspect.

In the fifth aspect of the present invention, the surface defect classification method according to one of the first to fourth aspect is implemented in the decision tree, thereby making it possible to discriminate a plurality of defect types and/or defect levels.

Brief Description of the Drawings

Fig. 1 is a block diagram showing a testing apparatus using a surface defect classification method according to an embodiment of the present invention.
Fig. 2 is a diagram showing a surface defect type discriminator in the testing apparatus.
Fig. 3 is a diagram showing a surface defect type/level discriminator using a surface defect classification method according to the present invention.

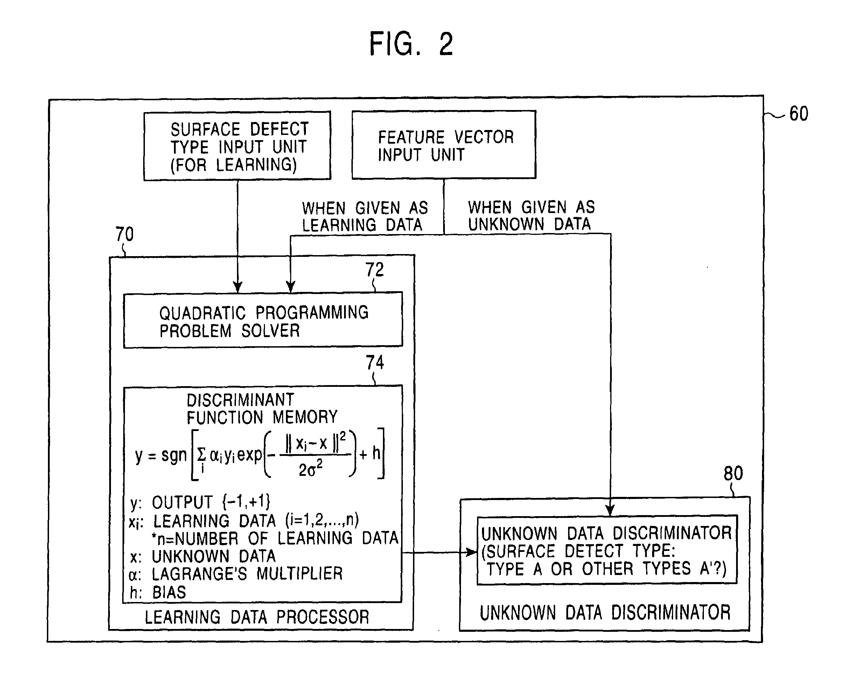

In Figs. 1 and 2, reference numerals denote the following parts.

10:      product under test
20:      illumination light source
30:      camera
40:      surface defect feature value extractor
50:      normalizer
60:      surface defect type discriminator
70:      learning data processor
72:      quadratic programming problem solver
74:      discriminant function memory
80:      unknown data discriminator

Best Mode for Carrying Out the Invention

Referring to the drawings, embodiments of the present invention are described below.

Fig. 1 shows an example of the overall structure of a surface defect detector using a camera for acquiring information about the surface state of an MUT. An MUT 10 moving in a direction denoted by an arrow L is illuminated with light emitted by an illumination light source 20. Light reflected from the MUT 10 is captured by a camera 30 and an image of the MUT 10 is taken.

The image is then processed by the surface defect feature value extractor 40 to detect a surface defect from a change in image density or the like and extract feature values in terms of a plurality of features. Herein, the features include the size of surface defect such as a length, a width, and an area, the shape of surface defect such as similarity to circle and an aspect ratio, and the image density such as the average image density of defect, the minimum image density of defect, and the maximum image density of defect.

Instead of the above-described means for acquiring information associated with a surface state of an MUT, another means may also be used. For example, an MUT may be illuminated with a laser beam, and information associated with a surface state may be acquired from a change in reflected or scattered light.

In the present invention, when data is dealt with in a feature space, if the range, within which the feature values vary, changes depending on the features, it is impossible to correctly evaluate the feature values. To avoid the above problem, the acquired feature values are normalized by a normalizer 50, for example, in accordance with equation (1) or (2).

$$\frac{x-\mu}{\sigma} \tag{1}$$

where $\mu$ is the average feature value of a particular feature, acquired via learning of data, and $\sigma$ is the standard deviation of the feature values of that feature, acquired via learning of the data.

$$\frac{x - x_{min}}{x_{max} - x_{min}} \tag{2}$$

where $x_{min}$ is the minimum feature value of a particular feature, acquired via learning of data, and $x_{max}$ is the maximum feature value of the that feature, acquired via learning of the data.

The normalized feature values are supplied to the surface defect type discriminator 60. From the normalized feature values, the surface defect type discriminator 60 detects the surface defect type. The result indicating the surface defect type is output via a surface defect type output unit 90.

Fig. 2 shows an example of the surface defect type discriminator 60. In this specific example, it is assumed that the surface defect type discriminator 60 determines whether a surface defect of interest is of a surface defect type A. The surface defect type discriminator 60 includes a learning data processor 70 and an unknown data discriminator 80. A set of feature values associated with surface defects acquired in the past, and data indicating the corresponding surface defect types is input to the learning data processor 70.

A quadratic programming problem solver 72 performs the following processing. (1) The learning data are plotted in a feature space. (2) A quadratic programming problem is solved such that an objective function is maximized under given constraint. (3) An optimum discriminant plane is acquired by solving of the quadratic programming problem. (4) The acquired optimum discriminant plane is employed as the discriminant function. The constraint imposed herein requires that a discriminant plane can be defined in a space to which the feature space is mapped by an assumed mapping function such that mapped feature values are linearly separable perfectly with respect to the discriminant plane. The objective function represents the distance between the discriminant plane and a point closest to the discriminant plane.

The produced discriminant plane is stored in a discriminant function memory 74. The correspondence between the feature values and the surface defect types is predetermined by a skilled person or the like. As for the learning data, it is sufficient to simply input data. If there is a change in the material of the MUT or in a production method, new learning data is input and the discriminant function is updated. That is, unlike the conventional technique, data analysis by a skilled person and cut-and-try establishment of the decision algorithm are unnecessary.

The unknown data discriminator 80 determines whether the surface defect of interest is of the surface defect type A, using the discriminant function stored in the discriminant function memory 74.

EXAMPLES

EXAMPLE 1

The method of learning performed by the learning data processor 70 of the surface defect type discriminator 60 is described in detail below for a case in which the surface defect type A is discriminated from the other surface defect types A'. A feature vector $\mathbf{x}_i$ of learning data represented as a point in the feature space is mapped by an assumed mapping function $\Phi$ as $\mathbf{x}_i \rightarrow \Phi(\mathbf{x}_i)$, wherein the mapping function satisfies the following condition.

$$\Phi(x_i) \cdot \Phi(x_j) = K(x_i \cdot x_j) \qquad (3)$$

That is, when feature vectors $\mathbf{x}_i$ and $\mathbf{x}_j$ in the feature space are mapped by the mapping function $\Phi$ to the space $\Phi$, the inner product $\Phi(\mathbf{x}_i) \cdot \Phi(\mathbf{x}_j)$ in the space $\Phi$ is equal to the function of the inner product $\mathbf{x}_i \cdot \mathbf{x}_j$ in the feature space.

Herein, i and j respectively denote learning data numbers, that is,

i, j = 1, 2,..., n (n is the number of learning data)

It is assumed that, in the mapping, the distance relationship in the feature space is preserved, and it is also assumed that, in the mapped space, that is, in the space $\Phi$, a set of surface defects A and a set of surface defects A' other than the surface defects A are linearly separable from each other.

Because those sets of surface defects are linearly separable in the space $\Phi$, the set of surface defects A and the set of surface defects A' can be discriminated using a sign function sgn (which returns +1 for any positive input and returns -1 for any negative input) as described below.

$$y = sgn[w \cdot \Phi(x) + h] \qquad (4)$$

where

y: classification output value {+1, -1}
w: weight vector
x: feature vector of an unknown defect
h: bias

Geometrically, equation (4) divides the space $\Phi$ into two subspaces bounded by a discriminant plane determined by the normal vector $\mathbf{w}$ and the bias h, and assigns 1 to one of the subspaces and -1 to the other subspace. However, when there is a discriminant plane with respect to which the set of surface defects A and the set of surface defects A' are linearly separable perfectly from each other, the normal vector $\mathbf{w}$ and the bias h cannot be uniquely determined. To avoid the above problem, of various discriminant planes, a discriminant plane having a greatest distance $d_m$ to a point closest to that discriminant plane is employed as an optimal discriminant plane. That is, a discriminant plane that causes the value $d_m$ given by the following equation (5) to become greatest is employed as the optimum discriminant plane.

$$d_m = \min_i \left[ \frac{\|w \cdot \Phi(x_i) + h\|}{\|w\|} \right] = \frac{\|w \cdot \Phi(x_{sv}) + h\|}{\|w\|} \rightarrow \text{maximized} \quad \cdots (5)$$

where $x_{sv}$ is a point closest to the optimal discriminant plane.

To remove the redundancy of **w** and h, **w** and h are normalized according to the following equation (6).

$$\min_i \|w \cdot \Phi(x_i) + h\| = \|w \cdot \Phi(x_{sv}) + h\| = 1 \quad \cdots (6)$$

Because the set of A and the set of A' are completely separable from each other, there must be ε that satisfies the following condition.

$$y_i \cdot [w \cdot \Phi(x_i) + h] \geq \varepsilon \tag{7}$$

If the normalization condition (6) is applied to the condition (7), then the condition (7) is rewritten as follows.

$$y_i \cdot [w \cdot \Phi(x_i) + h] \geq 1 \tag{8}$$

In conclusion, it is required to maximize the objective function given below under the constraint condition also given below.

$$\text{objective function: } \|w\|^2 \rightarrow \text{maximized}$$

$$\text{constraint: } y_i \cdot [w \cdot \Phi(x_i) + h] \geq 1 \tag{9}$$

Thus, the problem to be solved reduces to a quadratic programming problem.

The quadratic programming problem can be generally solved using a Lagrangian. Thus, let us introduce a Lagrangian as follows.

$$L(w, h, \alpha) = \frac{\|w\|^2}{2} - \sum_i \alpha_i \left[ y_i \cdot \{w \cdot \Phi(x_i) + h\} - 1 \right] \quad \cdots (10)$$

where $\alpha_i$ are Lagrangian multipliers ($\alpha_i \geq 0$).

At a saddle point of **w** and h, the following conditions hold.

$$\frac{\partial L}{\partial h} = -\sum_i \alpha_i y_i = 0 \quad \cdots (11)$$

$$\frac{\partial L}{\partial w} = w - \sum_i \alpha_i y_i \Phi(x_i) = 0 \quad \cdots (12)$$

If those equations are substituted into the original Lagrangian, then the present problem reduces to the following dual problem.

$$\text{objective function: } \sum_i \alpha_i - \frac{1}{2} \sum_i \sum_j \alpha_i \alpha_j y_i y_j \Phi(x_i) \Phi(x_j) \rightarrow$$

$$\text{maximized by properly selecting } \alpha$$

$$\text{constraint: } \sum_i \alpha_i y_i = 0, \ \alpha_i \geq 0 \qquad \cdots (13)$$

Herein, if equation (3) is substituted into the above condition, then the objective function and the constraint (13) are rewritten as follows.

$$\text{objective function: } \sum_i \alpha_i - \frac{1}{2} \sum_i \sum_j \alpha_i \alpha_j y_i y_j K(\chi_i \cdot \chi_j) \rightarrow$$

$$\text{maximized by properly selecting } \alpha$$

$$\text{constraint: } \sum_i \alpha_i y_i = 0, \ \alpha_i \geq 0 \qquad \cdots (14)$$

Herein, if K is given by the following equation

$$K(\chi_i \cdot \chi_j) = \exp\left(-\frac{\|\chi_i - \chi_j\|^2}{2\sigma^2}\right) \qquad \cdots (15)$$

then the objective function and the constraint (14) are rewritten as follows.

$$\text{objective function: } \sum_i \alpha_i - \frac{1}{2} \sum_i \sum_j \alpha_i \alpha_j y_i y_j \exp\left(-\frac{\|x_i - x_j\|^2}{2\sigma^2}\right) \rightarrow$$

$$\text{maximized by properly selecting } \alpha$$

$$\text{constraint: } \sum_i \alpha_i y_i = 0, \ \alpha_i \geq 0 \qquad \cdots (16)$$

Equation (16) can be solved, for example, by using a function quadprog available as a function for solving quadratic programming problems in Matlab. Thus, $\alpha$ can be determined.
From equations (3), (12), and (15), the discriminant function (4) can be rewritten as

$$y = \text{sgn}\left[\sum_i \alpha_i y_j \Phi(\chi_i) \cdot \Phi(\chi) + h\right]$$

$$= \text{sgn}\left[\sum_i \alpha_i y_j K(\chi_i \cdot \chi) + h\right] \qquad \cdots (17)$$

$$= \text{sgn}\left[\sum_i \alpha_i y_j \exp\left(-\frac{\|\chi_i - \chi\|^2}{2\sigma^2}\right) + h\right]$$

Thus, by using $\alpha$ obtained by solving the quadratic programming problem and by giving proper values for $\sigma$ and h, the discriminant function can be determined.

EXAMPLE 2

In practice, the distributions of the sets in the feature space are probabilistic, and data can include wrong data (that is incorrectly selected by a human inspector). Therefore, all learning data are not necessarily correct.

In this second example, in view of the above, the constraint in terms of complete linear separability imposed in the first example is relaxed. More specifically, the feature space is allowed to include a point that can cause an incorrect classification, and a penalty term is added to the objective function used in the first example, as described below.

In the present example, to allow incorrect classification, variable $\xi$ is introduced into the constraint, and a penalty parameter C imposed on incorrect classification is introduced. Thus, equation (9) is rewritten as follows.

$$\text{objective function: } \frac{\|w\|^2}{2} + C\sum_i \xi_i \rightarrow \text{maximized}$$

$$\text{constraint: } y_i \cdot [w \cdot \Phi(x_i) + h] \geq 1 - \xi_i \qquad \cdots (18)$$

If equation (18) is converted into the form of a dual problem by introducing a Lagrangian in a similar manner to the first example, and equation (15) is applied, then the following equation is obtained.

$$\text{objective function: } \sum_i \alpha_i - \frac{1}{2}\sum_i \sum_j \alpha_i \alpha_j y_i y_j \exp\left(-\frac{\|x_i - x_j\|^2}{2\sigma^2}\right) \rightarrow$$

$$\text{maximized by properly selecting } \alpha$$

$$\text{constraint: } \sum_i \alpha_i y_i = 0, \quad C \geq \alpha_i \geq 0 \qquad \cdots (19)$$

As with equation (16), equation (19) can also be solved, for example, by using a function quadprog available as a function for solving quadratic programming problems in Matlab. Thus, $\alpha$ can be determined.

The discriminant function is given in the same form as equation (17). Thus, by using $\alpha$ determined by solving the quadratic programming problem and by giving proper values for $\sigma$ and h, the discriminant function can be determined.

In this specific example, parameters in the discriminant function are set as follows: $C = 10^4$, $\sigma = 1.0$, and $h = 0$, or $C = \infty$, $\sigma = 10$, and $h = 0$.

EXAMPLE 3

In the second example described above, parameters are set such that the accuracy of defect classification for the surface defect type A (the probability that a defect determined to be of defect type A by a human inspector is correctly determined to be of defect type A by the surface defect detection apparatus) is substantially equal to the accuracy of defect classification for the surface defect type A' other than the surface defect type A (the probability that a defect determined to be of defect type A' by a human inspector is correctly determined to be of defect type A' by the surface defect detection apparatus). In some applications, a particular type of surface defect can cause a very serious problem, and thus it is necessary to correctly detect such a type of surface defects without missing them. In this case, it is desirable to improve the accuracy of defect classification for that type of defects even if this results in a reduction in accuracy of defect classification for the other types of defects.

To this end, in this third example, the accuracy of defect classification for a particular type of surface defects that are not allowed to be missed is increased to a desired level.

In the present example, in the discriminant function (17) automatically produced form learning data, the bias h is pre-adjusted such that a desired accuracy of defect classification can be achieved. That is, the discriminant plane is intentionally displaced by a skilled person so as to expand a feature space region of the important surface defect type that is not allowed to be missed, such that the accuracy of defect classification is increased to a desired value.

EXAMPLE 4

In the first to third examples, classification is performed in terms of surface defect types. In this fourth example, the surface defect level is discriminated, as described below.

In the present example, feature values in terms of the defect size such as a defect length, a defect width, and/or a defect area, and/or an image density are employed rather than feature values in terms of the shape such as similarity to circle or an aspect ratio. By using such feature values, the defect level can be discriminated in a similar manner to one of the first to third examples.

EXAMPLE 5

In the previous examples, it is determined whether a surface defect under examination is of a particular defect type or of a particular defect level. However, in many practical applications, it is desired to discriminate defects for a plurality of defect types A, B, C, and so on and/or a plurality of defect levels, for example, high, middle, and low levels. Thus, in this fifth example, a plurality of defect types and/or a plurality of defect levels are discriminated as described below.

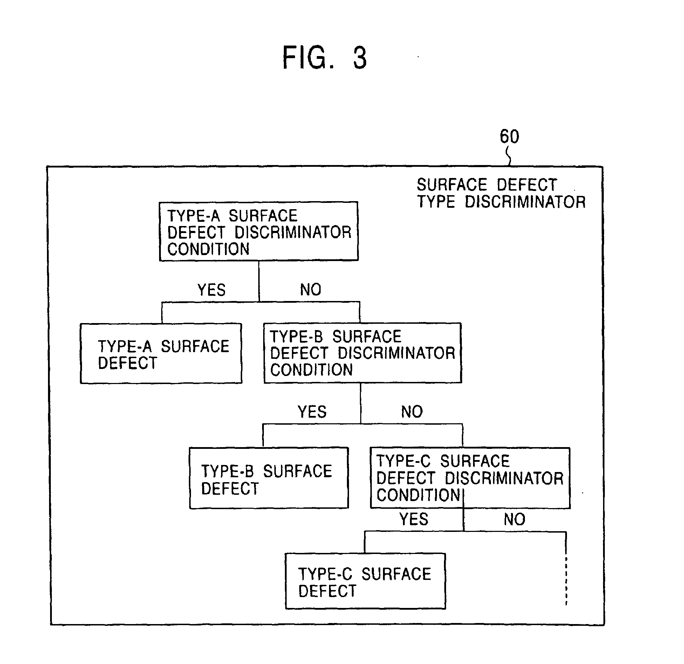

Fig. 3 shows a surface defect type discriminator 60 for discriminating a plurality of defect types. A plurality of decision conditions are defined in the form of a decision tree. First, a decision condition in terms of surface defect type A is examined to determine whether a given surface defect is of the surface defect type A or of the other surface defect types A'. If it is determined that the given surface defect is of the other types A', a decision condition in terms of surface defect type B is examined to determine whether the given surface defect is of the surface defect type B or of the other surface defect types B'. If it is determined that the given surface defect is of the other surface defect types B', a decision condition in terms of surface defect type C is examined. Similarly, following decision conditions are examined one by one. Note that there are as many decision conditions as there are surface defect types to be discriminated.

By replacing the decision conditions A, B, C, etc. with decision conditions in terms of defect levels or by adding decision conditions in terms of defect levels to the decision conditions A, B, C, etc., it becomes possible to discriminate surface defects in terms of a plurality of defect types and a plurality of defect levels.

In the present example, each decision condition in the decision tree is defined and examined in a similar manner to the manner in which defects are discriminated by the surface defect type discriminator 60 according to one of the first to fourth examples.

Industrial Applicability

The present invention makes it possible to increase the accuracy of defect classification in classification of surface scratch/defect types of products. The decision algorithm is automatically produced in a short time, and thus a troublesome task to establish the decision algorithm is minimized, and it is possible to start up the surface defect detection apparatus in a short time. Even when data associated with a particular defect type and other data are located close to a discriminant plane, correct decision is possible without overfitting. When a particularly high accuracy of defect classification is needed for a particular surface defect type that is not allowed to be missed, the discriminant plane can be intentionally displaced by a skilled person to expand a feature space region of feature values associated with that surface defect type thereby increasing the accuracy of defect classification for that surface defect type to a desired level. Not only the defect types but also defect levels can be discriminated. Furthermore, defect classification is possible for a combination of a plurality of defect types and a plurality of a defect levels.

## Claims

1. A surface defect classification method for acquiring information associated with a surface state of a material under test, extracting a feature value of a surface defect from the acquired information, determining whether the surface defect is of a particular defect type, on the basis of the extracted feature value, the method comprising the steps of:

   preparing, as learning data, feature values of surface defects acquired in the past and data indicating the particular surface defect type related to feature values;
   representing the learning data as points in a feature space;
   under constraint that a discriminant plane can be defined in a space to which the feature space is mapped by an assumed mapping function such that mapped feature values are perfectly linearly separable with respect to the discriminant plane, solving a quadratic programming problem such that an objective function defined as the distance between the discriminant plane and a point located closest to the discriminant plane is maximized;
   employing, as a discriminant function, an optimal discriminant plane obtained by solving the above quadratic programming problem; and
   substituting a feature value of a surface defect whose type is unknown into the discriminant function, and determining, from the resultant value of the discriminant function, whether the surface defect whose type is unknown is of said particular surface type.

2. A surface defect classification method for acquiring information associated with a surface state of a material under test, extracting a feature value of a surface defect from the acquired information, determining whether the surface defect is of a particular defect type, on the basis of the extracted feature value, the method comprising the steps of:

   preparing, as learning data, feature values of surface defects acquired in the past and data indicating the particular surface defect type related to feature values;
   representing the learning data as points in a feature space;
   setting constraint that when the feature space is mapped into a space by an assumed mapping function, a discriminant plane can be defined in the mapped space such that mapped feature values are linearly separable perfectly with respect to the discriminant plane;
   defining an objective function as the distance between the discriminant plane and a point located closest to the discriminant plane;
   relaxing the constraint in terms of the perfect linear separabilty such that there can exist a point that results in incorrect classification, and modifying the objective function by adding a penalty term to the objective function;
   determining a discriminant plane by solving a quadratic programming problem such that the modified objective function is maximized under the relaxed constraint, and employing the determined discriminant plane as a discriminant function; and
   substituting a feature value of a surface defect whose type is unknown into the discriminant function, and determining, from the resultant value of the discriminant function, whether the surface defect whose type is unknown is of said particular surface type.

3. A surface defect classification method according to claim 1 or 2, wherein the bias term in the discriminant function is adjusted such that a desired accuracy of defect classification is obtained for a particular important surface defect type.

4. A surface defect classification method for discriminating a defect level using a surface defect classification method according to one of claims 1 to 3.

5. A surface defect classification method for discriminating a plurality of defect types and/or a plurality of defect levels in accordance with a decision tree in which a surface defect classification method according to one of claims 1 to 4 is implemented.

# FIG. 1

20

30

10

L

MOVING
DIRECTION

| SURFACE DEFECT FEATURE EXTRACTOR | 40 |

| NORMALIZER | 50 |

| SURFACE DEFECT TYPE DISCRIMINATOR | 60 |

| SURFACE DEFECT TYPE OUTPUT UNIT | 90 |

# FIG. 2

EP 1 507 141 A1

SURFACE DEFECT
TYPE INPUT UNIT
(FOR LEARNING)

FEATURE VECTOR
INPUT UNIT

WHEN GIVEN AS
LEARNING DATA

WHEN GIVEN AS
UNKNOWN DATA

70

72

QUADRATIC PROGRAMMING
PROBLEM SOLVER

74

DISCRIMINANT
FUNCTION MEMORY

$$y = \mathrm{sgn}\left[\sum_i \alpha_i y_i \exp\left(-\frac{\|x_i - x\|^2}{2\sigma^2}\right) + h\right]$$

y: OUTPUT {-1,+1}
$x_i$: LEARNING DATA (i=1,2,...,n)
  *n=NUMBER OF LEARNING DATA
x: UNKNOWN DATA
α: LAGRANGE'S MULTIPLIER
h: BIAS

LEARNING DATA PROCESSOR

80

UNKNOWN DATA DISCRIMINATOR
(SURFACE DETECT TYPE:
TYPE A OR OTHER TYPES A'?)

UNKNOWN DATA DISCRIMINATOR

60

# FIG. 3

SURFACE DEFECT
TYPE DISCRIMINATOR

60

TYPE-A SURFACE
DEFECT DISCRIMINATOR
CONDITION

YES    NO

TYPE-A SURFACE
DEFECT

TYPE-B SURFACE
DEFECT DISCRIMINATOR
CONDITION

YES    NO

TYPE-B SURFACE
DEFECT

TYPE-C SURFACE
DEFECT DISCRIMINATOR
CONDITION

YES    NO

TYPE-C SURFACE
DEFECT

# EP 1 507 141 A1

**INTERNATIONAL SEARCH REPORT**

International application No.

PCT/JP03/06102

| A. CLASSIFICATION OF SUBJECT MATTER |
|---|
| Int.Cl$^7$ G01N21/892, G06T1/00, G06T7/00 |
| According to International Patent Classification (IPC) or to both national classification and IPC |

| B. FIELDS SEARCHED |
|---|
| Minimum documentation searched (classification system followed by classification symbols) |
| Int.Cl$^7$ G01N21/84-21/958, G06T7/00-7/60 |

Documentation searched other than minimum documentation to the extent that such documents are included in the fields searched

| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
    JICST FILE(JOIS)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 5-280960 A (Fuji Photo Film Co., Ltd.), 29 October, 1993 (29.10.93), Full text; all drawings & EP 563897 A1 | 1–5 |
| Y | JP 8-87572 A (AT & T CORP.), 02 April, 1996 (02.04.96), Full text; all drawings & US 5640492 A & EP 690406 A2 & CA 2149468 A | 1–5 |
| Y | CORTES, C. and VAPNIK, V.N., Support Vector Networks, Machine Learning, 1995, Vol.20, pages 273 to 297 | 1–5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 July, 2003 (25.07.03) | 12 August, 2003 (12.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

14

**INTERNATIONAL SEARCH REPORT**

| | International application No. |
|---|---|
| | PCT/JP03/06102 |

C (Continuation).  DOCUMENTS CONSIDERED TO BE RELEVANT

| Category* | Citation of document, with indication, where appropriate, of the relevant passages | Relevant to claim No. |
|---|---|---|
| Y | Atsuhiro TAKASU, "Support Vector Machine ni yoru Bunrui, separate Volume bit Hakken Kagaku to Data Mining", Kyoritsu Shuppan Co., Ltd., 2000 nen, pages 118 to 127 | 1-5 |
| A | JP 2001-256480 A  (Hitachi, Ltd.), 21 September, 2001 (21.09.01), Full text; all drawings (Family: none) | 1-5 |

Form PCT/ISA/210 (continuation of second sheet) (July 1998)